# EUROPÄISCHE PATENTANMELDUNG

(11) **EP 4 336 726 A1**
(43) Veröffentlichungstag der Anmeldung: **13.03.2024**
(21) Anmeldenummer: 22194405.1
(22) Anmeldetag: 07.09.2022
(51) Int. Cl.: H02P 21/22

(54) **BETRIEBSVERFAHREN FÜR EINEN BLDC MOTOR EINER ELEKTRISCHEN WERKZEUGMASCHINE**

(71) Anmelder: Hilti Aktiengesellschaft, 9494 Schaan (LI)
(72) Erfinder: Scherbaum, Markus, 86853 Gennach (DE); Wißmach, Walter, 80637 Muenchen (DE); Freischle, Justus, 86899 Landsberg (DE); Kidess, Anton, 86899 Landsberg am Lech (DE)
(74) Vertreter: Hilti Aktiengesellschaft Corporate Intellectual Property

(57) **Zusammenfassung**

Verfahren zum Betreiben einer Antriebseinheit einer Werkzeugmaschine, wobei die Antriebseinheit durch eine Netzspannung versorgt wird und die Antriebseinheit einen bürstenlosen Gleichstrommotor und einen dem Gleichstrommotor vorgeschalteten Inverter aufweist, und wobei im Rahmen des Verfahrens eine Gegen-EMK-Spannung, die in eine jeweilige Statorwicklung des bürstenlosen Gleichstrommotor induziert wird, ermittelt wird, wobei der Inverter mit feldorientierter Regelung betrieben wird und deren Statorstromsollwert amplitudenmoduliert ist.

## Beschreibung

Die vorliegende Erfindung betrifft ein Verfahren zum Betreiben einer Antriebseinheit einer Werkzeugmaschine, wobei die Antriebseinheit durch eine Netzspannung versorgt wird und die Antriebseinheit einen bürstenlosen Gleichstrommotor (BLDC-Motor) und einen dem Gleichstrommotor vorgeschalteten Inverter aufweist. Im Rahmen des Verfahrens wird eine Gegen-EMK-Spannung, die in eine jeweilige Statorwicklung des bürstenlosen Gleichstrommotor induziert wird, ermittelt.

Solche Verfahren sind grundsätzlich aus dem Stand der Technik bekannt.

Es ist Aufgabe der vorliegenden Erfindung ein Verfahren zum Betreiben einer Antriebseinheit einer Werkzeugmaschine anzugeben, das die Grundlage für reduzierte Schaltverluste und für ein verbessertes EMV-Verhalten schafft.

Die Aufgabe wird dadurch gelöst, dass der Inverter mit feldorientierter Regelung betrieben wird und deren Statorstromsollwert amplitudenmoduliert ist. Dies kann in Abhängigkeit des Kurvenverlaufs der Netzspannung, der Gegen-EMK-Spannung und Stellgröße eines Drehzahlreglers erzeugt wird.

Es hat sich als vorteilhaft herausgestellt, wenn der bürstenlose Gleichstrommotor im Rahmen des Verfahrens feldorientiert geregelt wird. In einer besonders bevorzugten Ausgestaltung weist die Antriebseinheit einen dem Gleichstrommotor vorgeschalteten schlanken Zwischenkreis auf. Unter einem schlanken Zwischenkreis wird insbesondere ein Zwischenkreis mit vergleichsweise geringer Speicherkapazität verstanden. Dies kann durch kompakte Folienkondensatoren und/oder kleine Elektrolytkondensatoren mit geringer Kapazität realisiert werden. Zusätzlich kann die Motorstromamplitude so modelliert werden, dass sich ein näherungsweise sinusförmiger Netzstromverlauf mit einem hohen Leistungsfaktor ergibt.

Die Erfindung schließt die Erkenntnis ein, dass durch einen Betrieb eines BLDC-Motors mit Blockkommutierung - wie dies beim Stand der Technik der Fall ist - in einem InverterAufnahmestrom typischerweise Stromoberschwingungen mit der sechsfachen elektrischen Statorfrequenz und deren ganzzahligen Vielfachen erzeugt werden. Diese Inverter-Oberschwingungen interagieren mit der Netzimpedanz und regen dabei den RLC-Schwingkreis bestehend aus Netzinnenwiderstand, Netzinduktivität und Zwischenkreiskapazität einer Lean-DC-Elektronik (schlanker Zwischenkreis) an. Fällt die sechsfache elektrische Motorrotationsfrequenz mit der Resonanzfrequenz des RLC-Schwingkreises zusammen, werden die Oberschwingungsamplituden des Inverter-Aufnahmestroms stark verstärkt und im Netzaufnahmestrom der Lean-DC Elektronik sichtbar. Durch diese Schwingungen wird der Leistungsfaktor sehr schlecht und kann bis auf den Bereich von ca. λ=0,7 sinken.

Durch das erfindungsgemäße Verfahren wird die Grundlage für reduzierte Schaltverluste und eine Regelung mit geringen Stromoberschwingungen für deutlich höhere Leistungsfaktoren geschaffen. Dies gilt insbesondere für den Fall, dass der bürstenlosen Gleichstrommotor feldorientiert geregelt wird.

In einer besonders bevorzugten Ausgestaltung ist vorgesehen, dass der Inverter im Ansteuermodus auf Basis eines Sollwerts, der sowohl die Netzspannung als auch die Gegen-EMK-Spannung berücksichtigt, angesteuert wird. Es hat sich als vorteilhaft herausgestellt, wenn, im Rahmen der Sollwertermittlung, die Gegen-EMK-Spannung von einem Betrag der Netzspannung subtrahiert und so eine erste Differenzspannung erhalten wird. In einer besonders bevorzugten Ausgestaltung wird die erste Differenzspannung für ihre negativen Spannungswerte auf den Wert null begrenzt.

In einer weiteren bevorzugten Ausgestaltung ist vorgesehen, dass, im Rahmen der Sollwertermittlung, die Gegen-EMK-Spannung von einer Netzscheitelspannung der Netzspannung subtrahiert und so eine zweite Differenzspannung erhalten wird. Es hat sich als vorteilhaft herausgestellt, wenn die erste Differenzspannung durch die zweite Differenzspannung dividiert, und der so erhaltene Quotient vorzugsweise auf einen Amplitudenwert von Eins normiert wird. In einer weiteren bevorzugten Ausgestaltung wird der Quotient, insbesondere der normierte Quotient, mit einer Drehzahlstellgröße, die von einem Drehzahlregler der Antriebseinheit stammt, multipliziert und so ein Statorstromsollwert generiert.

Mit anderen Worten basiert die Erfindung und ihre Ausgestaltungen auf dem Konzept, den BLDC-Motor mittels einer feldorientierten Regelung zu betreiben, um Schwankungen in der Momentanleistung des Motors wie infolgedessen auch Schwankungen bzw. Stromoberschwingungen des Inverteraufnahmestroms stark zu verringern. Des Weiteren kann der Sollwert der Motorstromregelung so generiert werden, dass der Motorstrom aktiv auf null geführt wird, wenn das Zeitintervall beim Netznulldurchgang erreicht wird. Die Breite des Zeitintervalls beim Netznulldurchgang, an dem kein Motorstrom fließt (Ausschaltmodus), wird hierbei vorteilhafterweise durch die induzierte Spannung des bürstenlosen Motors mit dem Schnittpunkt des Momentanwertes der Netzspannung definiert.

Vorteilhaft an der oben beschriebenen Sollwertgenerierung ist, dass auch verzerrte, nichtsinusförmige Eingangsspannungen im Verlauf des Motorstroms bzw. resultierend daraus im Verlauf des Eingangsstrom abgebildet werden. So kann auch bei verzerrten, nichtsinusförmigen Eingangsspannungen ein guter Leistungsfaktor erreicht werden. In einer besonders bevorzugten Ausgestaltung ist das Verfahren frei von einer Blockkommutierung des BLDC-Motors.

Gemäß einer weiteren vorteilhaften Ausführungsform kann es möglich sein, dass der Inverter in einem Zeitintervall, in dem die Netzspannung kleiner oder gleich der Gegen-EMK-Spannung ist, in einem Ausschaltmodus und ansonsten in einem Ansteuermodus angesteuert wird. Unter einen Ausschaltmodus wird insbesondere ein Modus verstanden, in dem der Inverter ausgeschaltet (d.h. insbesondere floating/hochohmig) ist. Dies gilt vorzugsweise für alle Kommutierungsblöcke des Inverters. Es hat sich als vorteilhaft herausgestellt, wenn die Inverter-Ansteuersignale im Ausschaltmodus auf null gesetzt werden. Unter einen Ansteuermodus wird insbesondere ein Modus verstanden, in dem der Inverter durch einen Stromregler, insbesondere feldorientiert, geregelt wird.

Die Aufgabe wird ebenfalls gelöst durch eine Antriebseinheit für eine Werkzeugmaschine, wobei die Antriebseinheit durch eine Netzspannung versorgt wird oder versorgt werden kann und die Antriebseinheit einen bürstenlosen Gleichstrommotor und einen dem Gleichstrommotor vorgeschalteten Inverter aufweist, und wobei die Antriebseinheit ausgebildet ist eine Gegen-EMK-Spannung, die in eine jeweilige Statorwicklung des bürstenlosen Gleichstrommotor induziert wird, zu ermitteln. Die Antriebseinheit ist ausgebildet, den Gleichstrommotor im Bremsmodus auf Basis einer Motorstromamplitude und einer Führungsgröße, die von einer Zwischenkreisspannung des Zwischenkreises abhängig ist, anzusteuern.

Die Antriebseinheit ist vorzugsweise Teil einer elektrischen Werkzeugmaschine, insbesondere einer Handwerkzeugmaschine. Die Antriebseinheit und die Werkzeugmaschine können durch die mit Bezug auf das Verfahren beschriebenen Merkmale in entsprechender Weise weitergebildet sein.

Weitere Vorteile ergeben sich aus der folgenden Figurenbeschreibung. In den Figuren sind besonders bevorzugte Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigt:
- Fig. 1: ein Blockdiagramm zur feldorientierten Regelung eines BLDC-Motors;
- Fig. 2: ein Blockdiagram zur Generierung des Statorstromsollwerts;
- Fig. 3: beispielhafte Verläufe verschiedener Zwischensignale bei der Sollwertgenerierung gemäß dem Blockdiagramm der Fig. 2; und
- Fig. 4: beispielhafte Verläufe von Netzspannung, Motorströme und Netzstrom im Zuge der feldorientierten Regelung des BLDC-Motors.

### Ausführungsbeispiele:

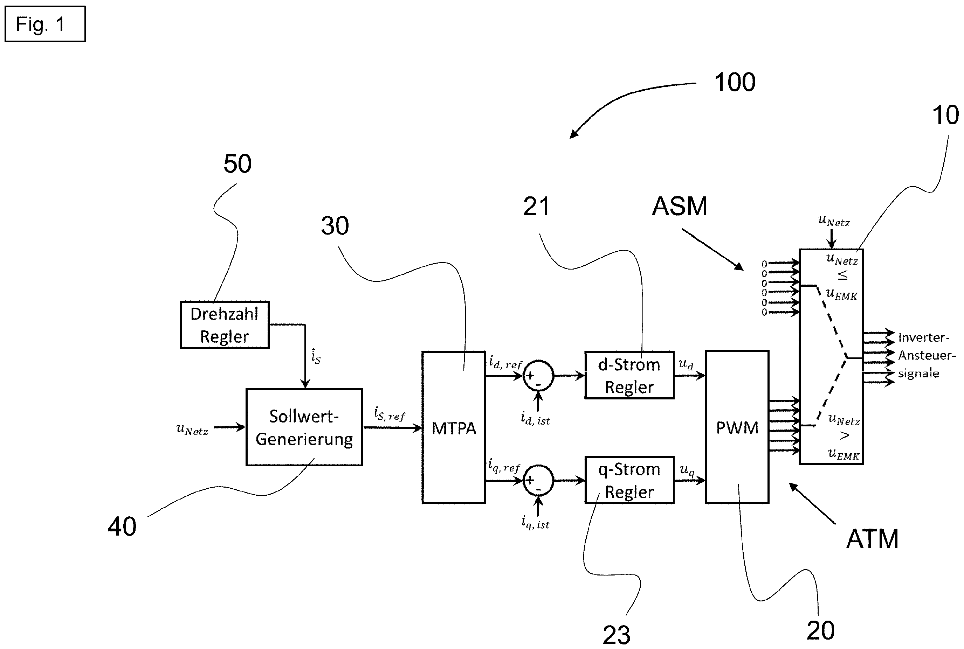

Im Folgenden wird ein bevorzugtes Ausführungsbeispiel des Verfahrens anhand einer feldorientierten Motorregelung mit rotorfesten d/q-Koordinatensystem (Park-Transformation) beschrieben. Dazu zeigt Fig. 1 ein Blockdiagramm 100 mit dem eine hier nicht im Detail dargestellte Antriebseinheit, die einen bürstenlosen Gleichstrommotor (BLDC-Motor), einen Inverter und einen dem Inverter vorgeschalteten Zwischenkreis aufweist, angesteuert werden kann.

Das Blockdiagramm 100 weist einen Umschaltblock 10 auf, dessen sechs Ausgangssignale einem hier nicht gezeigten Inverter zugeführt werden. Der Umschaltblock 10 kann in einem Ausschaltmodus ASM ("oberer" Pfad) und in einem Ansteuermodus ATM ("unterer Pfad") betrieben werden. Im Ausschaltmodus ASM werden sämtliche Inverter-Ansteuersignale auf null gesetzt. Der Ausschaltmodus ASM ist in demjenigen Zeitintervall in Kraft, in dem die Netzspannung *u_{Netz}* kleiner oder gleich der Gegen-EMK-Spannung *u_{EMK}* ist.

Anderenfalls, d.h. die Netzspannung *u_{Netz}* ist größer als die Gegen-EMK-Spannung *u_{EMK}*, befindet sich der Ansteuermodus ATM in Kraft, wobei der hier nicht gezeigte Inverter durch die Stromregler 21, 23, feldorientiert geregelt wird. Dafür weist das Blockdiagramm 100 weiterhin einen dem Umschaltblock 10 vorgeschalteten PWM-Block 20 zur pulsweitenmodulierten Ansteuerung des BLDC-Motors auf. Im Ansteuermodus ATM ("unterer Pfad") werden die Signale des PWM-Blocks 20 über den Umschaltblock 10 an den Inverter weitergegeben.

Eingangsgrößen für den PWM-Block 20 liefern der besagte d-Stromregler 21 und der q-Stromregler 23. Dem d-Stromregler 21 und dem q-Stromregler 23 vorgeschaltet ist MTPA (Maximum Torque per Ampere) - Block 30, der einen d-Sollstrom und einen q-Sollstrom ausgibt. Der MTPA-Block 30 erhält seinen Sollstrom wiederum von einem Berechnungsblock 40. Eingangsgröße für den Berechnungsblock 40 ist ein Drehzahlregler 50.

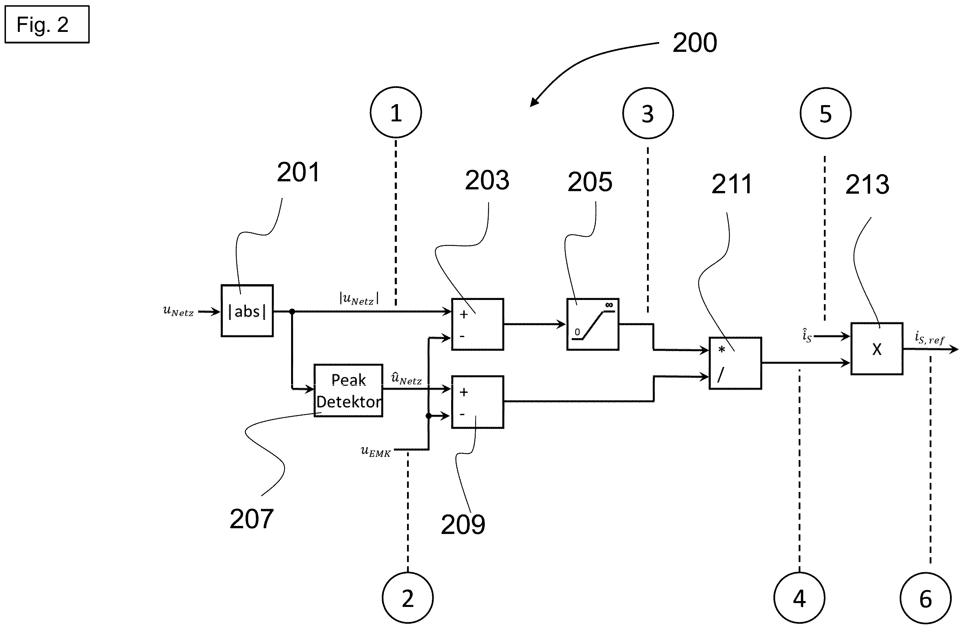

Ein Blockdiagram 200 zur Generierung des Statorstromsollwerts *i_{S,ref}* ist in Fig. 2 dargestellt. Das Blockdiagram 200 repräsentiert beispielhaft den Berechnungsblock 40 der Fig. 1. Aufgabe des Berechnungsblocks 40 ist es den Motorstrom so zu modulieren, dass der Inverteraufnahmestrom ungefähr dem Verlauf der Netzspannung folgt, um einen guten Leistungsfaktor zu erhalten, andererseits soll der Motorstrom auch auf den Wert null geführt werden, wenn Netzspannung *u_{Netz}* die Gegen-EMK-Spannung *u_{EMK}* unterschreitet.

Zunächst wird die Netzspannung *u_{Netz}* durch einen Betragsblock 201 in eine gleichgerichtete Netzspannung |*u_{Netz}*| überführt. Von dieser gleichgerichteten Netzspannung |*u_{Netz}*| wird mittels eines ersten Subtraktionsblocks 203 die Gegen-EMK-Spannung *u_{EMK}* abgezogen und deren negative Werte durch einen Begrenzerblock 205 auf null begrenzt. Von einer mittels eines Scheiteldetektionsblocks 207 detektierten Netzscheitelspannung *û_{Netz}* wird ebenfalls die EMK-Spannung *u_{EMK}* subtrahiert. Dies geschieht mittels eines zweiten Subtraktionsblocks 209. Die anschließende Division durch einen Divisionsblock 211 erzeugt den Verlauf der Kurvenform eines Stromreferenzsignals, welches auf die Amplitude eins normiert ist. Der Statorstromsollwert *i_{S,ref}*, der gleichzeitig die Ausgangsgröße des Fig. 1 dargestellten Berechnungsblocks 40 ist, wird letztendlich durch eine Multiplikation des Ausgangs der Divisionsblocks 211 mit der gewünschten Amplitude *î_{S}* erreicht. Dies geschieht mittels des Multiplikationsblocks 213. Die gewünschte Amplitude *î_{S}*, welche die Stellgröße vom Drehzahlregler vom in Fig. 1 gezeigten Drehzahlregler 50 ist, ändert sich nur langsam in Bezug auf die Netzspannung *u_{Netz}*, sodass dadurch der netzspannungsförmige Verlauf von *i_{S,ref}* nicht verzerrt wird.

Mit dem in Fig. 2 gezeigten Blockdiagramm kann der Sollwert der Motorstromregelung vorteilhafterweise so generiert werden, dass der Motorstrom aktiv auf null geführt wird, wenn das Zeitintervall beim Netznulldurchgang erreicht wird.

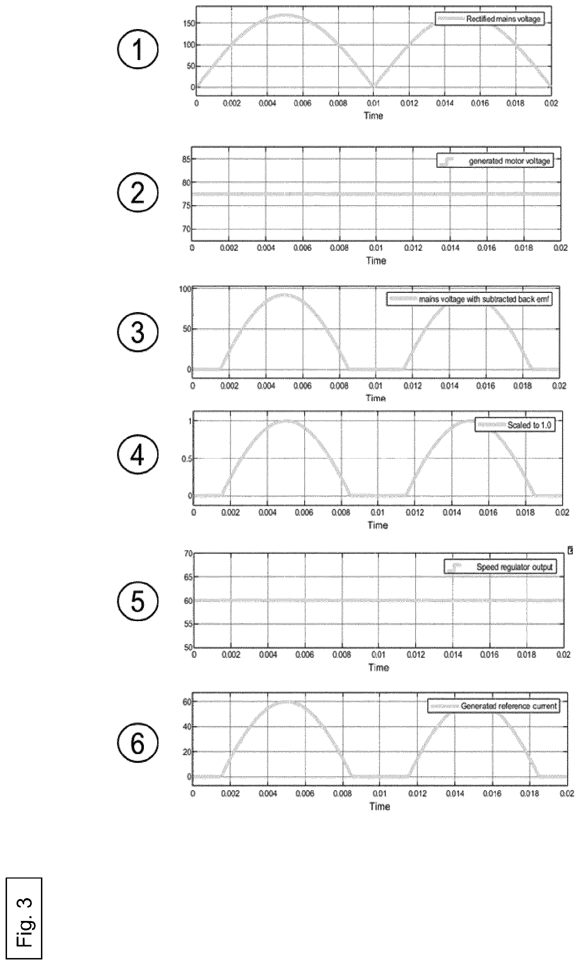

Beispielhafte Zeitverläufe verschiedener Zwischensignale bei der Sollwertgenerierung sind in Fig. 3 dargestellt. Dabei entsprechend die jeweils links von den Diagrammen genannten Zahlen den in Fig. 2 eingezeichneten Messpunkten 1 bis 6 (jeweils eingekreist).

Diagramm 1 zeigt den zeitlichen Verlauf der gleichgerichteten Netzspannung l*u_{Netz}*|. Diagramm 2 zeigt die Gegen-EMK-Spannung *u_{EMK}*. Diagramm 3 zeigt die Differenz von Netzspannung |*u_{Netz}*| und Gegen-EMK-Spannung *u_{EMK}*, wobei diese Differenz negative Werte ausschließt (vgl. Fig. 2 Begrenzerblock 205). Diagramm 4 zeigt den auf den Wert Eins normierten Quotienten von erster Differenzspannung und zweiter Differenzspannung. Diagramm 5 zeigt die Stellgröße *î_{S}*, die vom in Fig. 1 gezeigten Drehzahlregler 50 stammt. Diagramm 6 zeigt schließlich den zeitlichen Verlauf des Statorstromsollwerts *i_{S,ref}*, der die Ausgangsgröße des Fig. 1 dargestellten Berechnungsblocks 40 ist.

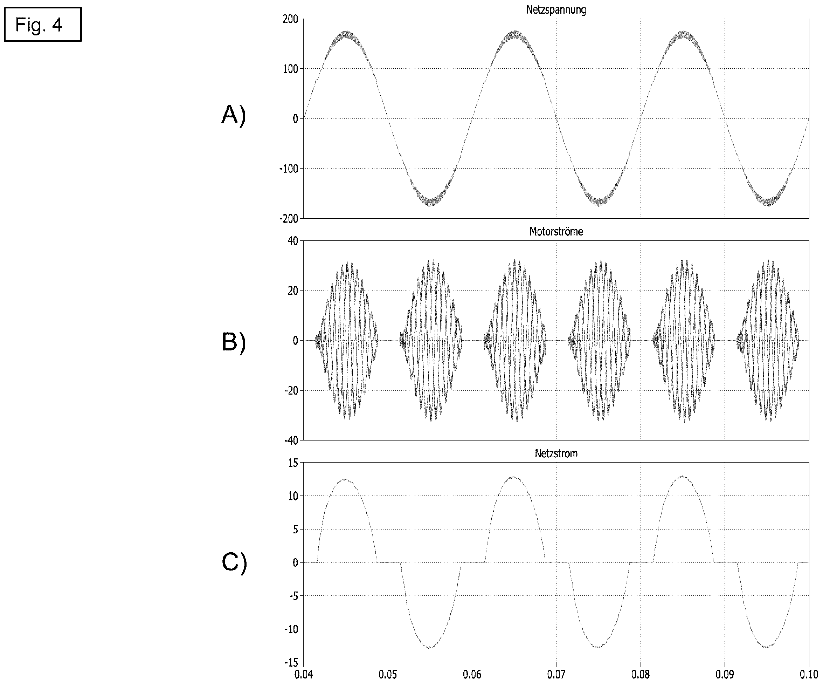

Fig. 4 zeigt typische Verläufe von Netzspannung (Diagramm A), den Motorphasenströmen (Diagramm B) und den Netzstromverlauf (Diagramm c), welche sich bei der hier beispielhaften Ausgestaltung der Erfindung ergeben. Im Beispiel in Fig. 5 wird vorteilhafterweise ein Leistungsfaktor von λ=0,97 erreicht.

### Bezuaszeichenliste

- 10: Umschaltblock
- 20: PWM-Block
- 21: d-Stromregler
- 23: q-Stromregler
- 30: MTPA-Block
- 40: Berechnungsblock
- 50: Drehzahlregler

- 100: Blockdiagramm für feldorientierte Motorregelung
- 200: Blockdiagramm für blockkommutierte Motorregelung

- 201: Betragsblock
- 203: erster Subtraktionsblock
- 205: Begrenzerblock
- 207: Scheiteldetektionsblock
- 209: zweiter Subtraktionsblock
- 211: Divisionsblock
- 213: Multiplikationsblock

- *î_{S}*: Stellgröße vom Drehzahlregler
- *i_{S,ref}*: Statorstromsollwert
- *u_{EMK}*: Gegen-EMK-Spannung
- *u_{Netz}*: Netzspannung
- *û_{Netz}*: Netzscheitelspannung

## Patentansprüche

1. Verfahren zum Betreiben einer Antriebseinheit einer Werkzeugmaschine, wobei die Antriebseinheit durch eine Netzspannung versorgt wird und die Antriebseinheit einen bürstenlosen Gleichstrommotor und einen dem Gleichstrommotor vorgeschalteten Inverter aufweist, und wobei im Rahmen des Verfahrens eine Gegen-EMK-Spannung, die in eine jeweilige Statorwicklung des bürstenlosen Gleichstrommotor induziert wird, ermittelt wird, **dadurch gekennzeichnet, dass** der Inverter mit feldorientierter Regelung betrieben wird und deren Statorstromsollwert amplitudenmoduliert ist.

2. Verfahren nach Anspruch 1,
**dadurch gekennzeichnet, dass** der Inverter im Ansteuermodus auf Basis eines Sollwerts, der sowohl die Netzspannung als auch die Gegen-EMK-Spannung berücksichtigt, angesteuert wird.

3. Verfahren nach Anspruch 2,
**dadurch gekennzeichnet, dass**, im Rahmen der Sollwertermittlung, die Gegen-EMK-Spannung von einem Betrag der Netzspannung subtrahiert und so eine erste Differenzspannung erhalten wird.

4. Verfahren nach Anspruch 3,
**dadurch gekennzeichnet, dass** die erste Differenzspannung für ihre negativen Spannungswerte auf null begrenzt wird.

5. Verfahren nach Anspruch 3 oder 4,
**dadurch gekennzeichnet, dass**, im Rahmen der Sollwertermittlung, die Gegen-EMK-Spannung von einer Netzscheitelspannung der Netzspannung subtrahiert und so eine zweite Differenzspannung erhalten wird.

6. Verfahren nach Anspruch 5,
**dadurch gekennzeichnet, dass**, im Rahmen der Sollwertermittlung, die erste Differenzspannung durch die zweite Differenzspannung dividiert, und der so erhaltene Quotient vorzugsweise auf eins normiert wird.

7. Verfahren nach Anspruch 6,
**dadurch gekennzeichnet, dass**, im Rahmen der Sollwertermittlung, der Quotient, insbesondere der normierte Quotient, mit einer Drehzahlstellgröße, die von einem Drehzahlregler der Antriebseinheit stammt, multipliziert und so ein Statorstromsollwert generiert wird.

8. Verfahren nach Anspruch 7,
**dadurch gekennzeichnet, dass** der bürstenlosen Gleichstrommotor im Rahmen des Verfahrens feldorientiert auf Basis des Statorstromsollwerts geregelt wird.

9. Verfahren nach Anspruch 8,
**dadurch gekennzeichnet, dass** der Statorstromsollwerts im Rahmen des Verfahrens durch einen MTPA-Block geführt wird.

10. Verfahren nach wenigstens einem der vorangehenden Ansprüche,
**dadurch gekennzeichnet, dass** die Antriebseinheit einen dem Gleichstrommotor vorgeschalteten schlanken Zwischenkreis aufweist.

11. Verfahren nach wenigstens einem der vorangehenden Ansprüche,
**dadurch gekennzeichnet, dass** der Inverter in einem Zeitintervall, in dem die Netzspannung kleiner oder gleich der Gegen-EMK-Spannung ist, in einem Ausschaltmodus und ansonsten in einem Ansteuermodus angesteuert wird.

12. Antriebseinheit für eine Werkzeugmaschine, wobei die Antriebseinheit durch eine Netzspannung versorgt wird oder versorgt werden kann und die Antriebseinheit einen bürstenlosen Gleichstrommotor und einen dem Gleichstrommotor vorgeschalteten Inverter aufweist, und wobei die Antriebseinheit ausgebildet ist eine Gegen-EMK-Spannung, die in eine jeweilige Statorwicklung des bürstenlosen Gleichstrommotor induziert wird, zu ermitteln,
**dadurch gekennzeichnet, dass** die Antriebseinheit ausgebildet ist den Gleichstrommotor im Bremsmodus auf Basis einer Motorstromamplitude und einer Führungsgröße, die von einer Zwischenkreisspannung des Zwischenkreises abhängig ist, anzusteuern.

13. Werkzeugmaschine, insbesondere Handwerkzeugmaschine mit einer Antriebseinheit nach Anspruch 12.
